# EUROPÄISCHE PATENTSCHRIFT

(11) **EP 1 062 770 B1**
(45) Veröffentlichungstag und Bekanntmachung des Hinweises auf die Patenterteilung: **08.09.2004**
(21) Anmeldenummer: 99916802.4
(22) Anmeldetag: 18.03.1999
(51) Int. Cl.: H04L 12/28, H04Q 7/22

(54) **DATENADAPTER FÜR KOMMUNIKATIONSEINRICHTUNGEN ZUM FERNÜBERTRAGEN VON NUTZDATEN, INSBESONDERE VON PAKET- UND/ODER SPRACHDATEN**
DATA ADAPTER FOR COMMUNICATIONS DEVICES FOR THE TELETRANSMISSION OF USEFUL DATA, ESPECIALLY OF PACKET AND/OR VOICE DATA
ADAPTATEUR DE DONNEES POUR SYSTEMES DE COMMUNICATION DESTINES A LA TELETRANSMISSION DE DONNES UTILES, NOTAMMENT DE DONNEES DE PAQUET ET/OU DE DONNEES VOCALES

(30) Priorität: 18.03.1998 DE 19811630
(43) Veröffentlichungstag der Anmeldung: 27.12.2000
(73) Patentinhaber: SIEMENS AKTIENGESELLSCHAFT, 80333 München (DE)
(72) Erfinder: BIEDERMANN, Rolf, D-46863 Ahaus (DE); MÜLLER, Wilhelm, D-85457 Wörth (DE)
(86) Internationale Anmeldenummer: PCT/DE1999/000772
(87) Internationale Veröffentlichungsnummer: WO 1999/048248

(56) Entgegenhaltungen:
- WO-A-94/05101
- SOUSA A ET AL: "A WIRELESS DIGITAL SYSTEM BASED ON THE DECT STANDARD" 38TH. MIDWEST SYMPOSIUM ON CIRCUITS AND SYSTEMS: PROCEEDINGS, RIO DE JANEIRO, AUG. 13 - 16, 1995, Bd. 1, Nr. SYMP. 38, 13. August 1995 (1995-08-13), Seiten 518-521, XP000684626 CALOBA L P;DINIZ P; DE QUEIROZ A; WATANABE E H (EDS )ISBN: 0-7803-2973-2

## Beschreibung

Die Erfindung betrifft ein Datenadapter für Kommunikationseinrichtungen zum Fernübertragen von Nutzdaten, insbesondere von Paket- und/oder Sprachdaten gemäß dem Oberbegriff des Patentanspruches 1.

Für die Fernübertragung von Nutzdaten - das Senden und Empfangen von z.B. Sprach- und/oder Paketdaten über größere Entfernungen - zwischen räumlich voneinander getrennten, als Datenquelle und Datensenke ausgebildeten Datenendeinrichtungen (Kommunikationseinrichtungen) eines Telekommunikationsnetzes (Szenario zur Fernübertragung von Nutzdaten) werden spezielle Datenadapter eingesetzt, die die Datenendeinrichtungen an das Telekommunikationsnetz derart anbinden, daß die Nutzdaten auf der netzspezifischen Übertragungsstrecke übertragbar sind.

In der Druckschrift "it + ti - Informationstechnik und technische Informatik 37 (Februar 1995), Heft 1, R. Oldenbourg Verlag, Seiten 21 bis 28" ist unter dem Thema "Mobile Computing - Komponenten, Systemintegration, Anwendungen" ein Szenario zur Fernübertragung von Nutzdaten, insbesondere Paketdaten, vorgestellt.

Bei der Fernübertragung von Nutzdaten, insbesondere Paketdaten, werden als Datenadapter für beispielsweise als Personal Computer, Notebooks, PDA-Geräte (Personal Digital Assistant) ausgebildete Kommunikationseinrichtungen bisher vorrangig Modem's und PCMCIA-Karten (Personal Computer Memory Card International Association) verwendet.

Während die genannten Kommunikationseinrichtungen mit Hilfe der Modem's im wesentlichen an leitungsgebundene Telekommunikationsnetze anbindbar sind, ist eine Anbindung der Einrichtungen mit Hilfe der PCMCIA-Karten auch an drahtlose Telekommunikationsnetze möglich. So kann z.B in bekannter Weise ein Notebook über eine PCMCIA-Karte und einen GSM-Handapparat (GSM-Handy) an das GSM-Netz angebunden werden. Eine solche Geräteanordnung ist zwar ortsunabhängig verwendbar, aber sie ist nicht für unterschiedliche benutzerspezifische Anwendungsfälle einsetzbar. So ist z.B. nicht möglich, daß der Benutzer unabhängig von dem Telekommunikationsnetz nicht ein eigenes benutzerindividuelles Netz zum Fernübertragen von Nutzdaten installieren kann.

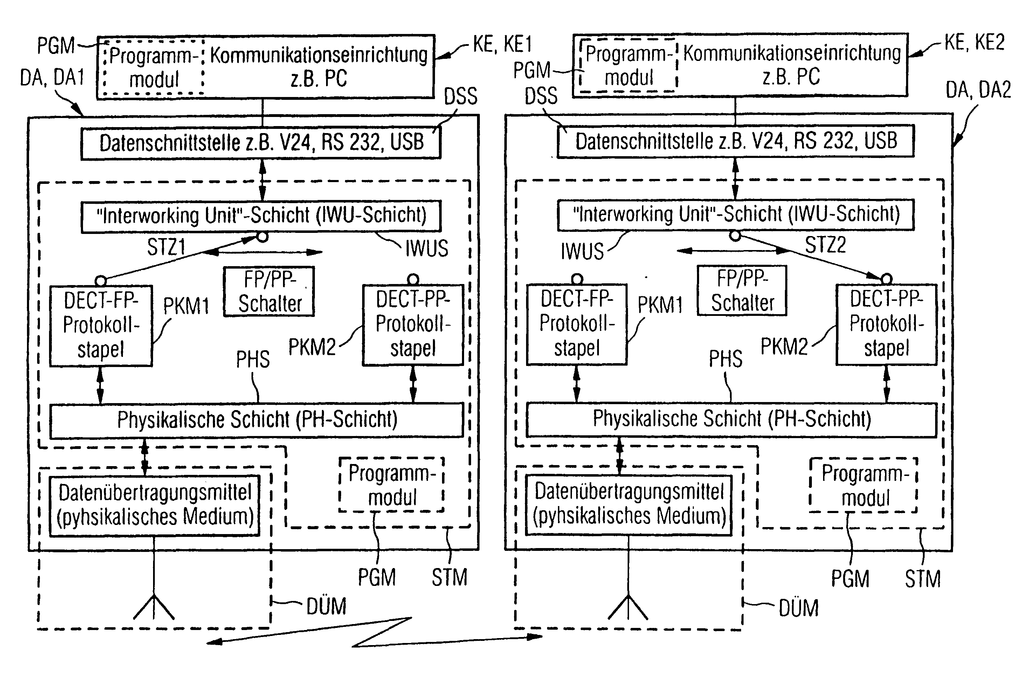

In der Publikation *"Vortrag von A. Elberse, M. Barry,* G. *Fleming zum* Thema: *"DECT Data Services - DECT in Fixed and Mobi*le *Networks", 17.*/*18.* Juni *1996, Hotel Sofitel, Paris; Seiten 1 bis 12* und *Zusammenfassung"* wird - ausgehend von der Druckschrift "Nachrichtentechnik *Elektronik 42 (1992) Jan.*/*Feb. Nr. 1,* Berlin, *DE; U. Pilger* "Struktur *des DECT-Standards",* Seiten *23 bis* 29 **in Verbindung mit** der ETSI-Publikation ETS *300175-1...9, Oktober* 1992 und den Druckschriften *Components 31 (1993), Heft 6, Seiten 215 bis 218; S. Althammer, D. Brückmann: "Hochoptimierte IC's für DECT-Schnurlostelefone"* und WO 96/38991 (vgl. Figuren 5 und 6 mit der jeweils dazugehörigen Beschreibung) - die prinzipielle Verwendbarkeit der DECT-Technologie (Digital Enhanced Cordless Telecommuncation) für die drahtlose mobile Fernübertragung von Sprach- und/oder Paketdaten vorgestellt, bei der der Benutzer durch die DECT-Netzzugriffstechnologie in bezug auf die Fernübertragung von Nutzdaten sowohl zum eigenen Netzbetreiber werden kann als auch eine Zugriffsmöglichkeit zu einem übergeordneten Telekommunikationsnetz hat.

Aus der DE-40 26 426 A1 ist darüber hinaus ein System zur Datenübertragung bekannt, bei dem ein oder mehrer Personal Computer und Peripheriegeräte, insbesondere Drucker, innerhalb eines Raumes drahtlos und zwar über den Funkweg zugriffsselektiv zum Zwecke einer Datenübertragung miteinander verbindbar sind.

Aus der DE-43 20 047 A1 ist weiterhin ein Schnurlos-Telefon bekannt, das zur Erweiterung für beliebige andere Anwendungen wenigstens ein Mobilteil aufweist, das mittels einer zusätzlichen netzinversen Schnittstelle zu einer schnurlosen Telefonanschlußeinheit (TAE-Dose) ergänzt ist. Durch eine solche Anschaltmöglichkeit können nahezu alle üblichen Endeinrichtungen, wie z.B. Telefone, BTX, Modem, Fax, Anrufbeantworter, Fernschalt- und Fernwirkeinrichtungen und Zusatzeinrichtungen direkt ortsveränderlich und drahtlos betrieben werden.

Die der Erfindung zugrundeliegende Aufgabe besteht darin, die Fernübertragung von Nutzdaten, insbesondere von Paketund/oder Sprachdaten, mittels Kommunikationseinrichtungen in bezug auf Bedienkomfort - z.B. vielseitige, universelle Einsatz- und Verwendbarkeit - und Ortsunabhängigkeit (Mobilität) zu verbessern.

Diese Aufgabe wird ausgehend von dem im Oberbegriff des Patentanspruches 1 definierten Datenadapter durch die im Kennzeichen des Patentanspruches 1 angegebenen Merkmale gelöst.

Die der Erfindung zugrundeliegende Idee besteht darin, einem Datenadapter für Kommunikationseinrichtungen zum Fernübertragen von Nutzdaten, insbesondere von Paket- und/oder Sprachdaten sowohl eine festteilspezifische Luftschnittstellenarchitektur zur Ausführung (Abarbeitung) eines vorgegebenen Luftschnittstellenprotokolls als auch eine mobilteilspezifische Luftschnittstellenarchitektur zur Ausführung (Abarbeitung) des vorgegebenen Luftschnittstellenprotokolls zuzuordnen und die dem Datenadapter zugeordneten Luftschnittstellenarchitekturen je nach Anwendungsfall, d.h. welches Szenario zur Fernübertragung von Nutzdaten realisiert werden soll und insbesondere welche Kommunikationseinrichtung mit dem Datenadapter verbunden ist, manuell und/oder automatisch zu aktivieren.

Dadurch ist es beispielsweise insbesondere möglich, unterschiedliche Szenarien im Büro- und Heimbereich zu realisieren. So ist z.B. möglich, Nutzdaten, insbesondere Sprachund/oder Paketdaten, zwischen örtlich mobil eingesetzten Personal Computern, Notebooks, PDA-Geräten etc. ohne Kabelinstallation fernzuübertragen. Desweiteren ist es möglich, daß zwischen einem Personal Computer, einem Notebook, einem PDA-Gerät etc. und dem Telekommunikationsnetz oder dem Internet eine schnurlose Verbindung herstellbar ist. So kann man infolgedessen künftig mit einem Notebook - unabhängig von TAE-Dose und zu Festnetzgebühren und nicht wie bisher zu Mobilfunknetzgebühren vom Garten aus im Internet "surfen". Der z.B. mit einer V.24-Schnittstelle ausgebildeten Datenschnittstelle zur Kommunikationseinrichtung versehene Datenadapter erlaubt je nach Modem Datenübertragungsraten von z.B. bis zu 64kBit/s, der Übertragungsrate eines ISDN-Nutzdatenkanals.

Die Entscheidung, welche der beiden Luftschnittstellenarchitekturen zum Einsatz kommt, wird dabei vorzugsweise vom Benutzer des Datenadapters getroffen, indem dieser gemäß den Ansprüchen 3 und 4 Bedienprozeduren an dem Datenadapter oder an der Kommunikationseinrichtung vornimmt. Als Bedienprozeduren kommen dabei vorzugsweise Tastenbetätigungen und/oder entsprechende Spracheingaben in Frage.

Die für den Betrieb des Datenadapters notwendigen Programmodule können gemäß den Ansprüchen 5 und 6 entweder dem Datenadapter selbst oder der Kommunikationseinrichtung zugeordnet werden. Während sich die Vorgehensweise gemäß Anspruch 5 bei Personal Computern, Notebooks, PDA-Geräten etc. anbietet, ist die Vorgehensweise gemäß Anspruch 6 bei Druckern und Fax-Geräten vorteilhaft.

Gemäß der Ansprüche 7 und 8 sind verschiedene vorteilhafte Ausführungsformen des Datenadapters angegeben.

Weitere vorteilhafte Weiterbildungen der Erfindung sind in den übrigen Patentansprüchen angegeben.

Ein Ausführungsbeispiel der Erfindung wird anhand der FIGUR erläutert.

Die einzige FIGUR zeigt den prinzipiellen, auf dem OSI/ISO-Schichtenmodell **[***vgl. **(1)** : Unterrichtsblätter* Deutsche *Telekom, Jg. 48, 2*/*1995,* Seiten *102 bis 111; **(2)** : ETSI*-Publikation *ETS 300175-1...9, Oktober 1992***]** beruhenden Aufbau eines z.B. als PCMCIA-Karte oder Anschlußgerät ausgebildeten Datenadapters DA für Kommunikationseinrichtungen KE zum Fernübertragen von Nutzdaten, insbesondere Sprach- und/oder Paketdaten anhand eines Anwendungsfall (Szenario zum Fernübertragen von Sprach- und/oder Paketdaten), bei dem eine z.B. als Personal Computer (PC) ausgebildete erste Kommunikationseinrichtung KE1 über einen z.B. als DECT-Datenadapter ausgebildeten ersten Datenadapter DA1 und eine z.B. als Personal Computer (PC) ausgebildete zweite Kommunikationseinrichtung KE2 über einen z.B. als DECT-Datenadapter ausgebildeten zweiten Datenadapter DA2 zur Fernübertragung von Nutzdaten, z.B. Paketdaten, drahtlos miteinander verbunden sind. Die beiden Geräte (Einrichtung und Datenadapter) sind z.B. so weit voneinander entfernt angeordnet, daß die im DECT-Standard angegebene oder die nach dem DECT-Standard prinzipiell mögliche Übertragungsreichweite nicht überschritten wird. Darüber hinaus befinden sich die beiden Geräte vorzugsweise nicht in dem Funkbereich einer DECT-Feststation, zu der die Geräte eine Zugriffsberechtigung haben. Um den Austausch der Daten zwischen den beiden Geräten zu ermöglichen, wird ein Datenadapter der beiden Datenadaptern DA1, DA2 - z.B. der erste Datenadapter DA1 - in einem DECT-Festteil-spezifischen Modus, dem FP-Modus (Fixed Part), betrieben bzw. in einen ersten Steuerungszustand STZ1 gesteuert und der andere Datenadapter - z.B der zweite Datenadapter DA2 - in einem DECT-Mobilteilspezifischen Modus, dem PP-Modus (Portable Part), betrieben bzw. in einen zweiten Steuerungszustand STZ2 gesteuert.

Der Datenadapter DA1, DA2 enthält hierzu eine z.B. als serielle V.24-, RS232- oder USB-Schnittstelle (Universal Serial Bus) ausgebildete Datenschnittstelle DSS, über die der Datenadapter DA1, DA2 mit der jeweiligen Kommunikationseinrichtung KE1, KE2 verbunden ist. Darüber hinaus sind in dem Datenadapter DA1, DA2 Steuerungsmittel STM und Datenübertragungsmittel DÜM enthalten. Die Datenübertragungsmittel DÜM entsprechen gemäß dem ISO/OSI-Schichtenmodell dem physikalischen Medium, in denen die für die Fernübertragung der Nutzdaten in dem Datenadapter DA1, DA2 notwendige Hardware enthalten ist. Die Steuerungsmittel STM enthalten die für die Fernübertragung der Nutzdaten in dem Datenadapter DA1, DA2 notwendige Software. So enthalten die Steuerungsmittel STM eine "Interworking Unit"-Schicht (IWU-Schicht) IWUS, ein als DECT-FP-Protokollstapel ausgebildetes erstes Protokollmodul PKM1, ein als DECT-PP-Protokollstapel ausgebildetes zweites Protokollmodul PKM2, eine physikalische Schicht (PH-Schicht) PHS und gegebenenfalls ein Programmodul PGM. Da dieses Programmodul PGM alternativ auch in der Kommunikationseinrichtung KE1, KE2 enthalten sein kann, ist das Programmodul PGM in der FIGUR gepunktet eingezeichnet.

Die IWU-Schicht IWUS ist einerseits mit der Datenschnittstelle DSS verbunden und ist andererseits - je nachdem, in welcher Modus der Datenadapter DA1, DA2 betrieben werden soll bzw. welcher Steuerungszustand STZ1, STZ2, z.B. über einen FP/PP-Schalter, eingestellt worden ist - mit dem ersten Protokollmodul PKM1 oder dem zweiten Protokollmodul PKM2 verbunden. Die Protokollmodule PKM1, PKM2 sind wiederum mit der PH-Schicht PHS verbunden, die ihrerseits mit den Datenübertragungsmitteln DÜM verbunden ist.

Mit dem Programmodul PGM kann der Datenadapter DA1, DA2 z.B. über den FP/PP-Schalter so gesteuert (konfiguriert) werden, daß der Datenadapter DA1, DA2 entweder als Basisstation oder als Mobilteil ausgebildet ist bzw. funktioniert. Wenn der eine Datenadapter als Basisstation und der andere Datenadapter als Mobilteil konfiguriert ist, dann kann das Mobilteil mit Hilfe der bekannten DECT-Anmeldeprozeduren über die Luftschnittstelle bei der Basisstation angemeldet werden. Mit dem Programmodul PGM ist auf diese Weise auch eine initialisierung und Kontrolle (Steuerung) der DECT-Anmeldeprozeduren möglich. Nach der erfolgten Anmeldung ist die drahtlose Fernübertragung von Nutzdaten zwischen den Kommunikationseinrichtungen KE1, KE2 möglich.

Zusätzlich oder alternativ zu dem vorstehend beschriebenen Szenario zum Fernübertragen von Sprach- und/oder Paketdaten sind weitere Szenarien möglich. Stellvertretend für diese Vielzahl von Szenarien folgendes Szenario:

Eine Kommunikationseinrichtung z.B. ein Notebook ist einerseits z.B. an einem lokalen Netzwerk mit einem Netzwerkserver (Local Area Network; LAN) über eine LAN-Karte angeschlossen (stationärer Betrieb des Notebooks) und andererseits mit einem Datenadapter verbunden. Wird der Datenadapter in diesem Fall im FP-Modus betrieben, d.h. an dem lokalen Netzwerk ist eine Basisstation angeschlossen, dann können mit einer anderen Kommunikationseinrichtung z.B. einem Telefon, die mit einem im PP-Modus betriebenen Datenadapter verbunden oder mit einem gewöhnlichen DECT-Mobilteil über die am lokalen Netzwerk angeschlossene Kommunikationseinrichtung Sprachdaten entweder über "Interworking" vom lokalen Netzwerk (LAN) zum ISDN-Netz oder als Internet-Telefonie fernübertragen werden.

Ist das Notebook jedoch nicht am lokalen Netzwerk (LAN) angeschlossen (mobiler Betrieb des Notebooks), so kann der mit dem Notebook verbundene Datenadapter von den FP-Modus in den PP-Modus umgeschaltet werden. Ist an dem lokalen Netzwerk (LAN) eine andere Basisstation mittel- oder unmittelbar angeschlossen, dann können mit dem Notebook Paketdaten zwecks Drucker- oder LAN-Serverzugriffe (Stw.: Internet-Sessions) fernübertragen werden.

## Patentansprüche

1. Datenadapter für Kommunikationseinrichtungen zum Fernübertragen von Nutzdaten, insbesondere von Paket- und/oder Sprachdaten, mit
(a) einer die Verbindung zur Kommunikationseinrichtung unterstützenden Datenschnittstelle (DSS),
(b) Datenübertragungsmitteln (DÜM) zum drahtlosen Senden/Empfangen von Daten nach einem vorgegebenen Luftschnittstellenprotokoll,
(c) Steuerungsmitteln (STM), die mit der Datenschnittstelle (DSS) und den Datenübertragungsmitteln (DÜM) derart verbunden und denen Programmodule (PGM) derart zugeordnet sind, daß die Nutzdaten bidirektional über die Datenschnittstelle (DSS) gemäß einem entsprechenden Schnittstellenprotokoll und über die Datenübertragungsmittel (DÜM) gemäß dem vorgegebenen Luftschnittstellenprotokoll übertragen werden,
**dadurch gekennzeichnet, daß**
(d) erste Protokollmodule (PKM1) zum Senden in Abwärtsrichtung und Empfangen in Aufwärtsrichtung vorgesehen sind,
(e) zweite Protokollmodule (PKM2) zum Empfangen in Abwärtsrichtung und Senden in Aufwärtsrichtung vorgesehen sind,
(f) die Steuerungsmittel (STM) derart ausgebildet sind, daß in Abhängigkeit von dem Szenario zur Fernübertragung der Nutzdaten - insbesondere davon, welche Kommunikationseinrichtung dem Datenadapter zugeordnet ist - die ersten Protokollmodule (PKM1) oder die zweiten Protokollmodule (PKM2) manuell und/oder automatisch aktiviert werden.

2. Datenadapter nach Anspruch 1, **dadurch gekennzeichnet, daß**
die Steuerungsmittel (STM) zwei Steuerungszustände - einen ersten Steuerungszustand (STZ1), in dem die Datenschnittstelle (DSS) und die ersten Protokollmodule (PKM1) verbunden sind und einen zweiten Steuerungszustand (STZ2), in dem die Datenschnittstelle (DSS) und die zweiten Protokollmodule (PKM2) verbunden sind - aufweist.

3. Datenadapter nach Anspruch 2, **dadurch gekennzeichnet, daß**
die Steuerungsmittel (STM) und die Kommunikationseinrichtung (KE1, KE2) derart ausgebildet sind, daß die Steuerungsmittel (STM) über Bedienprozeduren an der Kommunikationseinrichtung (KE1, KE2) in die zwei Steuerungszustände (STZ1, STZ2) gesteuert werden.

4. Datenadapter nach Anspruch 2, **dadurch gekennzeichnet, daß**
die Steuerungsmittel (STM) und der Datenadapter (DA1, DA2) derart ausgebildet sind, daß die Steuerungsmittel (STM) über Bedienprozeduren am Datenadapter (DA1, DA2) in die zwei Steuerungszustände (STZ1, STZ2) gesteuert werden.

5. Datenadapter nach einem der Ansprüche 1 bis 4, **dadurch gekennzeichnet, daß**
die Programmodule (PGM) in der Kommunikationseinrichtung (KE1, KE2) angeordnet sind.

6. Datenadapter nach einem der Ansprüche 1 bis 4, **dadurch gekennzeichnet, daß**
die Programmodule (PGM) in dem Datenadapter (DA1, DA2) angeordnet sind.

7. Datenadapter nach einem der Ansprüche 1 bis 6, **dadurch gekennzeichnet, daß**
dieser insbesondere als Karte, z.B. PCMCIA-Karte [Personal Computer Memory Card International Association] in der Kommunikationseinrichtung (KE1, KE2) integriert ist.

8. Datenadapter nach einem der Ansprüche 1 bis 6, **dadurch gekennzeichnet, daß**
dieser als Anschlussgerät an die Kommunikationseinrichtung (KE1, KE2) angeschlossen ist.

9. Datenadapter nach einem der Ansprüche 1 bis 8, **dadurch gekennzeichnet, daß**
die Datenschnittstelle (DSS) als RS232-, V.24-Schnittstelle oder USB-Schnittstelle [Universal Serial Bus] ausgebildet ist.

10. Datenadapter nach einem der Ansprüche 1 bis 9, **dadurch gekennzeichnet, daß**
das Luftschnittstellenprotokoll das DECT-, PHS- oder GSM-Protokoll oder das UMTS-Protokoll für den gepaarten und ungepaarten Frequenzbereich ist.

11. Datenadapter nach einem der Ansprüche 1 bis 10, **dadurch gekennzeichnet, daß**
die Kommunikationseinrichtung (KE1, KE2) ein Personal Computer, ein Notebook, ein PDA-Gerät, ein Fax-Gerät, ein Drucker, ein leitungsgebundenes Telefon und/oder ein servergesteuertes lokales Netzwerk [Local Area Network (LAN)] ist.

## Claims

1. Data adapter for communication devices for the telecommunication of useful data, particularly of packet data and/or voice data, having
(a) a data interface (DSS) supporting the link to the communication device,
(b) data transmission means (DÜM) for the wireless transmission/reception of data on the basis of a prescribed air interface protocol,
(c) control means (STM) which are connected to the data interface (DSS) and to the data transmission means (DÜM) in such a way, and to which program modules (PGM) are allocated in such a way, that two-way transmission of the useful data is effected using the data interface (DSS) on the basis of an appropriate interface protocol and using the data transmission means (DÜM) on the basis of the prescribed air interface protocol,
**characterized in that**
(d) first protocol modules (PKM1) are provided for transmitting in the downlink and for receiving in the uplink,
(e) second protocol modules (PKM2) are provided for receiving in the downlink and for transmitting in the uplink,
(f) the control means (STM) are designed such that the first protocol modules (PKM1) or the second protocol modules (PKM2) are activated manually and/or automatically on the basis of the scenario for the telecommunication of the useful data - in particular on the basis of which communication device is allocated to the data adapter.

2. Data adapter according to Claim 1,
**characterized in that**
the control means (STM) have two control states - a first control state (STZ1), in which the data interface (DSS) and the first protocol modules (PKM1) are connected, and a second control state (STZ2), in which the data interface (DSS) and the second protocol modules (PKM2) are connected.

3. Data adapter according to Claim 2,
**characterized in that**
the control means (STM) and the communication device (KE1, KE2) are designed such that the control means (STM) are controlled so as to adopt the two control states (STZ1, STZ2) using operating procedures on the communication device (KE1, KE2).

4. Data adapter according to Claim 2,
**characterized in that**
the control means (STM) and the data adapter (DA1, DA2) are designed such that the control means (STM) are controlled so as to adopt the two control states (STZ1, STZ2) using operating procedures on the data adapter (DA1, DA2).

5. Data adapter according to one of Claims 1 to 4,
**characterized in that**
the program modules (PGM) are arranged in the communication device (KE1, KE2).

6. Data adapter according to one of Claims 1 to 4,
**characterized in that**
the program modules (PGM) are arranged in the data adapter (DA1, DA2).

7. Data adapter according to one of Claims 1 to 6,
**characterized in that**
it is integrated in the communication device (KE1, KE2), particularly in the form of a card, e.g. a PCMCIA card [Personal Computer Memory Card International Association].

8. Data adapter according to one of Claims 1 to 6,
**characterized in that**
it is connected to the communication device (KE1, KE2) as a peripheral.

9. Data adapter according to one of Claims 1 to 8,
**characterized in that**
the data interface (DSS) is in the form of an RS232 interface, a V.24 interface or a USB interface [Universal Serial Bus].

10. Data adapter according to one of Claims 1 to 9,
**characterized in that**
the air interface protocol is the DECT protocol, the PHS protocol or the GSM protocol or is the UMTS protocol for the paired and unpaired frequency range.

11. Data adapter according to one of Claims 1 to 10, **characterized in that**
the communication device (KE1, KE2) is a personal computer, a Notebook, a PDA unit, a fax machine, a printer, a line-connected telephone and/or a server-controlled local area network (LAN).

## Revendications

1. Adaptateur de données pour des systèmes de communication destinés à la télétransmission de données utiles, en particulier de données de paquet et/ou de données vocales, comprenant
(a) une interface de données (DSS) supportant la liaison avec le système de communication,
(b) des moyens de transmission de données (DÜM) pour l'émission/réception sans fil de données selon un protocole d'interface radio prédéfini,
(c) des moyens de commande (STM), qui sont reliés à l'interface de données (DSS) et aux moyens de transmission de données (DÜM) et auxquels sont attribués des modules de programme (PGM), de telle sorte que les données utiles sont transmises de façon bidirectionnelle par l'interface de données (DSS) selon un protocole d'interface approprié et par les moyens de transmission de données (DÜM) selon le protocole d'interface radio prédéfini,
**caractérisé en ce que**
(d) des premiers modules de protocole (PKM1) sont prévus pour l'émission dans le sens descendant et l'émission dans le sens montant,
(e) des seconds modules de protocole (PKM2) sont prévus pour la réception dans le sens descendant et l'émission dans le sens montant,
(f) des moyens de commande (STM) sont conçus de telle sorte que les premiers modules de protocole (PKM1) ou les seconds modules de protocole (PKM2) sont activés manuellement et/ou automatiquement en fonction du scénario pour la télétransmission des données utiles, en particulier en fonction du système de communication qui est attribué à l'adaptateur de données.

2. Adaptateur de données selon la revendication 1, **caractérisé en ce que** les moyens de commande (STM) présentent deux états de commande - un premier état de commande (STZ1), dans lequel l'interface de données (DSS) et les premiers modules de protocole (PKM1) sont reliés et un second état de commande (STZ2), dans lequel l'interface de données (DSS) et les seconds modules de protocole (PKM2) sont reliés.

3. Adaptateur de données selon la revendication 2, **caractérisé en ce que** les moyens de commande (STM) et le système de communication (KE1, KE2) sont conçus de telle sorte que les moyens de commande (STM) sont commandés au moyen de procédures d'utilisation sur le système de communication (KE1, KE2) entre les deux états de commande (STZ1, STZ2).

4. Adaptateur de données selon la revendication 2, **caractérisé en ce que** les moyens de commande (STM) et l'adaptateur de données (DA1, DA2) sont conçus de telle sorte que les moyens de commande (STM) sont commandés au moyen de procédures d'utilisation sur l'adaptateur de données (DA1, DA2) entre les deux états de commande (STZ1, STZ2).

5. Adaptateur de données selon l'une quelconque des revendications 1 à 4, **caractérisé en ce que** ce que
les modules de programme (PGM) sont disposés dans le système de communication (KE1, KE2).

6. Adaptateur de données selon l'une quelconque des revendications 1 à 4, **caractérisé en ce que**
les modules de programmes (PGM) sont disposés dans l'adaptateur de données (DA1, DA2).

7. Adaptateur de données selon l'une quelconque des revendications 1 à 6, **caractérisé en ce que**
cet adaptateur est intégré en particulier comme carte, par exemple carte PCMCIA [Personal Computer Memory Card International Association] dans le système de communication (KE1, KE2).

8. Adaptateur de données selon l'une quelconque des revendications 1 à 6, **caractérisé en ce que**
cet adaptateur est raccordé comme appareil de branchement au système de communication (KE1, KE2).

9. Adaptateur de données selon l'une quelconque des revendications 1 à 8, **caractérisé en ce que**
l'interface de données (DSS) est conçue comme une interface RS232, V.24 ou une interface USB [Universal Serial Bus].

10. Adaptateur de données selon l'une quelconque des revendications 1 à 9, **caractérisé en ce que**
le protocole d'interface radio est le protocole DECT, PHS ou GSM ou le protocole UMTS pour la plage de fréquences appariée et non appariée.

11. Adaptateur de données selon l'une quelconque des revendications 1 à 10, **caractérisé en ce que**
le système de communication (KE1, KE2) est un ordinateur individuel, un notebook, un appareil PDA, un télécopieur, une imprimante, un téléphone relié par fil et/ou un réseau local commandé par serveur [Local Area Network (LAN)].
